# EUROPÄISCHE PATENTSCHRIFT

(11) **EP 0 963 563 B1**
(45) Veröffentlichungstag und Bekanntmachung des Hinweises auf die Patenterteilung: **07.09.2005**
(21) Anmeldenummer: 98910596.0
(22) Anmeldetag: 10.02.1998
(51) Int. Cl.: G01V 8/12, G06F 3/00

(54) **ANORDNUNG UND VERFAHREN ZUR DETEKTION EINES OBJEKTS IN EINEM VON WELLEN IM NICHTSICHTBAREN SPEKTRALBEREICH ANGESTRAHLTEN BEREICH**
METHOD AND DEVICE FOR DETECTING AN OBJECT IN AN AREA RADIATED BY WAVES IN THE INVISIBLE SPECTRAL RANGE
AGENCEMENT ET PROCEDE POUR LA DETECTION D'UN OBJET DANS UNE ZONE IRRADIEE PAR DES ONDES DANS LE DOMAINE SPECTRAL INVISIBLE

(30) Priorität: 28.02.1997 DE 19708240
(43) Veröffentlichungstag der Anmeldung: 15.12.1999
(73) Patentinhaber: SIEMENS AKTIENGESELLSCHAFT, 80333 München (DE)
(72) Erfinder: MAGGIONI, Christoph, D-81541 München (DE); KÄMMERER, Bernhard, D-85521 Ottobrunn (DE)
(86) Internationale Anmeldenummer: PCT/DE1998/000368
(87) Internationale Veröffentlichungsnummer: WO 1998/038533

(56) Entgegenhaltungen:
- EP-A- 0 055 366
- EP-A- 0 626 636
- US-A- 5 138 304
- US-A- 5 528 263
- US-A- 5 591 972
- US-B- 6 353 428
- PATENT ABSTRACTS OF JAPAN vol. 006, no. 179 (P-142), 14.September 1982 & JP 57 094672 A (HITACHI LTD), 12.Juni 1982,
- WELLNER P: "THE DIGITALDESK CALCULATOR: TANGIBLE MANIPULATION ON A DESK TOP DISPLAY" PROCEEDINGS OF THE SYMPOSIUM ON USER INTERFACE SOFTWARE AND TECHNOL ( UIST ), HILTON HEAD, S. CAROLINA, NOV. 11 - 13, 1991, Nr. SYMP. 4, 11.November 1991, ASSOCIATION FOR COMPUTING MACHINERY, Seiten 27-33, XP000315063 in der Anmeldung erwähnt
- MüTZE: "ABC der Optik" 1972, VERLAG WERNER DAUSSIEN , HANAU/MAIN

## Beschreibung

Die Erfindung betrifft eine Anordnung und ein Verfahren zur Detektion eines Objekts in einem von Wellen im nichtsichtbaren Spektralbereich angestrahlten Bereich.

Im Rahmen der Mensch-Maschine-Interaktion ist es wünschenswert, wenn mittels eines Rechners verschiedene Gliedmaßen, wie beispielsweise Kopf oder Hand, oder auch abstrakte Gegenstände, wie beispielsweise ein Zeigestab, erkannt werden. Genügt die Erkennung einer Echtzeitanforderung, so können (Teil-)Bewegungen der Objekte detektiert werden bzw. Gesten erkannt werden. Eine mögliche Anwendung ist eine Projektion einer von einem Rechner erzeugten Benutzeroberfläche hinter einen vorgebbaren Bereich. Der Benutzer agiert auf der Benutzeroberfläche berührungslos, indem er eine Eingabeeinheit (Finger, Hand oder Zeigestab) auf eine Kontrollfläche (Schalter der Oberfläche) bewegt.

Ein Verfahren zur Gestenerkennung ist zum Beispiel aus bekannt.

Weiterhin ist eine Projektion mit Gestenbedienung nach oder P. Wellner: The DigitalDesk Calculator: Tangible Manipulation on a Desk Top Display, Proc. of the UIST'91, 11.-13.11.1991, Seiten 27-33 bekannt.

Bei allen bekannten Verfahren erfolgt die Auswertung der Geste im sichtbaren Spektralbereich. Dabei besteht zum einen das Problem, daß die Projektion von dem Objekt, das die Geste ausführt, unterschieden werden muß, zum anderen können die Farbe des Hintergrunds, auf den die Projektion erfolgt, und der Grad der Umgebungshelligkeit die Detektion deutlich erschweren bis unmöglich machen.

Aus Lichtzeiger, z.B. US-Patent 5,138,304 sind eine Anordnung und ein Verfahren bekannt, bei denen ein Lichtpunkt in einem Bereich detektierbar ist. Dabei kann der Lichtpunkt auch als Infrarotlicht oder anderes Licht projiziert werden, das für das menschliche Auge unsichtbar ist.

Zeigerdetektion EP-A-0 626 636 offenbart eine Anordnung und ein Verfahren, bei denen die Position einer Hand auf einer virtuellen und realen Schreibtischoberfläche erfasst werden kann.

Auch Erkennungsalgorithmus, gestützt auf die Parallaxe von Schattenbildern EP-A-0 055 366, offenbart eine Anordnung, bei der eine Tischplatte mit auf einem Bildschirm dargestellten Informationen beleuchtet und ein Objekt darüber detektiert wird.

Die Aufgabe der Erfindung besteht darin, eine Detektion eines in einen projizierten Bereich eingebrachten Objektes zu ermöglichen, wobei vermieden wird, daß sich Projektion und Aufnahme gegenseitig beeinflussen.

Diese Aufgabe wird gemäß den Merkmalen der unabhängigen Patentansprüche gelöst.

Um ein Objekt in einem vorgebbaren Bereich zu detektieren, wird es dazu von Wellen, deren Wellenlänge im nichtsichtbaren Spektralbereich liegt, angestrahlt. Eine Empfangseinrichtung ist speziell für einen den Wellen entsprechenden nichtsichtbaren Spektralbereich abgeglichen und nimmt demnach nur Wellen in diesem Spektrum auf. Das zu detektierende Objekt reflektiert die Wellen auf eine andere Art (z.B. absorbiert die Haut Infrarotlicht stärker als anorganischglatte Materialien) als der Hintergrund. Demnach können die von der Empfangseinrichtung aufgenommenen Wellen mittels eines Erkennungsalgorithmus das Objekt entdecken und die mit dem Objekt verbundene Bewegung detektieren.

Eine Weiterbildung der Erfindung besteht darin, eine Infrarotlichtquelle zur Emission der Wellen im nichtsichtbaren Spektralbereich zu verwenden. Dabei kann die Infrarotlichtquelle realisiert sein als entweder mindestens eine Infrarotleuchtdiode oder mindestens eine Glühbirne mit vorgeschaltetem Infrarotfilter.

Weiterhin ist es vorteilhaft, wenn das vorgebbare Gebiet von unten mit Infrarotlicht durchleuchtet wird, wobei im sichtbaren Spektralbereich die Projektionsfläche reflektierend und im Infrarot-Spektralbereich durchlässig ausgestaltet ist.

Schließlich ist es vorteilhaft, wenn eine Einheit, die die Wellen im nichtsichtbaren Spektralbereich aussendet, mit der Empfangseinrichtung (Kamera) auf der gleichen optischen Achse liegt.

Ferner ist es zweckmäßig, wenn auf dem angestrahlten Bereich die Oberfläche entweder aus Reflexgewebe, aus Reflexfilm, oder aus speziellem Gewebe mit prismenbeschichteter Oberfläche besteht.

Zweckmäßig ist das Verfahren zum Betrieb der Erfindung, weil hinter den Bereich ein Videobild projiziert wird, das von einem Rechner generiert wird und über mindestens ein Feld mit einer Kontrollcharakteristik verfügt. Im Bereich wird das Objekt bewegt und die Kontrollcharakteristik wird durch dieses Objekt ausgelöst, indem das Objekt für eine vorgebbare Zeitdauer an dem mit der Kontrollcharakteristik verknüpften Feld verharrt. Das Objekt kann zweckmäßig ein Finger, eine Hand oder ein Zeigestab sein. Weiterhin kann mit dem Objekt ein Mauszeiger oder ein sonstiger Eingabezeiger assoziiert sein, der durch Bewegung des bspw. Fingers, oder allgemein des Objekts, das für die Eingabe verwendet wird, über das projizierte Gebiet bewegt wird.

Die Projektion kann auch auf eine Leinwand erfolgen. Eine Eingabe geschieht durch Deuten mit einem vorgebbaren Objekt auf diese Leinwand, indem von einem Rechner mindestens ein Feld mit einer Kontrollcharakteristik auf die Leinwand projiziert wird und das Eingabeobjekt für eine vorgebbare Zeitdauer über diesem Feld verharrt. Hierbei sei angemerkt, daß ohne Einschränkung für das vor den Projektion bewegte Objekt beispielhaft eine Hand, ein Finger, oder ein Zeigestab angenommen werden kann.

Weiterbildungen der Erfindung ergeben sich aus den abhängigen Ansprüchen.

Anhand der folgenden Figuren wird ein Ausführungsbeispiel näher dargestellt.

Es zeigen
- Fig.1: ein Blockdiagramm, das die Schritte des erfindungsgemäßen Verfahrens enthält und
- Fig.2: eine Skizze, die die prinzipielle Anordnung einer möglichen Realisierung der Erfindung darstellt.

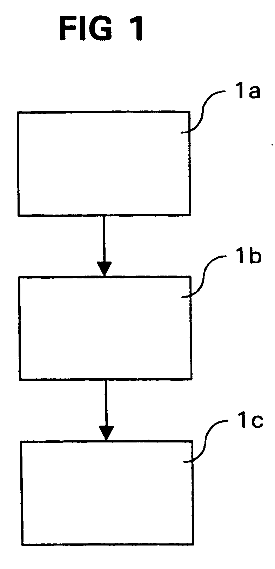

In Figur 1 wird dargestellt, welche Schritte das erfindungsgemäße Verfahren umfaßt. In einem ersten Schritt la wird ein vorgebbarer Bereich mit Wellen im nichtsichtbaren Spektralbereich angestrahlt. Eine Empfangseinrichtung, die die emittierten Wellen im nichtsichtbaren Spektralbereich aufnimmt, empfängt die von dem angestrahlten Bereich reflektierten Wellen. Wird ein vorgebbares Objekt in den angestrahlten Bereich bewegt, so werden die von dem Objekt reflektierten Wellen mittels eines Erkennungsalgorithmus unterschieden von den anderen in dem Bereich reflektierten Wellen (Schritt 1b). Schließlich wird das Objekt im Schritt lc detektiert (identifiziert). Verharrt nun dieses als Eingabeeinheit erkanntes Objekt für eine vorgebbare Zeit auf einem mit einer Kontrollcharakteristik verknüpften Feld, das auf den Bereich projiziert wird, so wird die Kontrollcharakteristik, vergleichbar dem Klicken mit einer Maus auf ein dafür geeignetes Feld, ausgelöst.

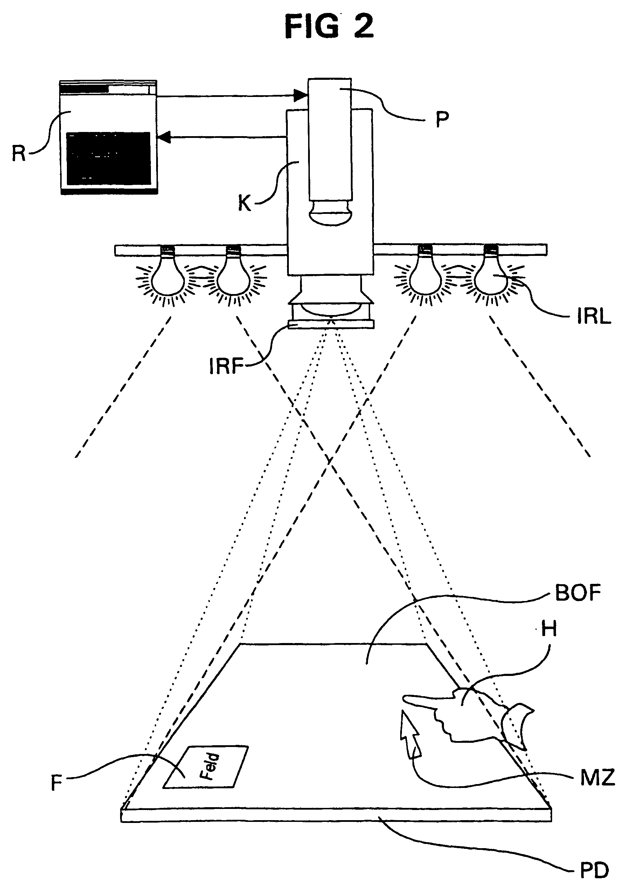

In Figur 2 wird eine erfindungsgemäße Anordnung anhand eines Virtual-Touch-Screens beschrieben. Eine Benutzeroberfläche BOF wird auf einen vorgebbaren Bereich, hier ein Projektionsdisplay PD, abgebildet. Das Projektionsdisplay PD ersetzt in diesem Fall einen konventionellen Bildschirm. Die Eingabe erfolgt durch direktes Zeigen, in Fig.2 angedeutet durch die Hand H, auf die Benutzeroberfläche BOF. Dadurch können beispielsweise Tastatur, Maus, Touchscreen oder Digitalisiertablett konventioneller Systeme ersetzt werden. Die Erkennung der Gesten sowie die Positionierung innerhalb der Benutzeroberfläche BOF werden durch ein videobasiertes System (Gestik-Computer) realisiert, das in der Lage ist, Projektion und Form z.B. der menschlichen Hand in Echtzeit zu erkennen und zu verfolgen (beschrieben beispielsweise in Gestenerkennung, z.B. DE 195 16 664 C1 oder Projektion mit Gestenbedienung und Auswertung im sichtbaren Bereich US-Patent 5,528,263).

Im Beispiel, das in Figur 2 dargestellt ist, wird das Projektionsdisplay mit Infrarotlicht beleuchtet. Die Infrarotlichtquelle IRL kann vorteilhaft mittels Infrarotleuchtdioden ausgeführt sein. Eine Kamera K, die vorzugsweise mit einem speziellen Infrarotfilter IRF, das im infraroten Spektralbereich empfindlich ist, ausgestaltet ist, nimmt das Projektionsdisplay PD auf. Mit einem Projektor P, der von einem Rechner R gesteuert wird, wird die Benutzeroberfläche BOF auf das Projektionsdisplay PD abgebildet. Die Benutzeroberfläche BOF kann dabei ausgestaltet sein wie bspw. ein Menilsystem auf einem Monitor des Rechners R. Ein Mauszeiger MZ wird jetzt nicht mit einer herkömmlichen Eingabevorrichtung, wie beispielsweise einer optischen oder mechanischen Maus oder eines Trackballs, bewegt, sondern durch die Hand H des Benutzers. Anstelle der Hand H kann bspw. auch ein Zeigestab verwendet werden. Soll, wie hier im Beispiel, auf der Benutzeroberfläche BOF die Kontrollcharakteristik eines Feldes F aufgerufen werden, so wird die Hand H über das Feld F bewegt, wobei der Mauszeiger MZ der Hand H folgt. Verharrt die Hand H für eine vorgebbare Zeitdauer über dem Feld F, so wird die mit dem Feld F verknüpfte Kontrollcharakteristik auf dem Rechner R ausgelöst.

Die Erfindung ermöglicht es also, die Projektion, hier die Benutzeroberfläche BOF, ohne Einfluß auf die Aufnahme auszugestalten, da die im Infrarotbereich empfindliche Kamera K die vom Projektor angezeigte Benutzeroberfläche BOF nicht aufnimmt. Die im sichtbaren Spektralbereich projizierte Information für den Benutzer ist somit für die Auswertung der Eingabe mittels der Kamera K durch den Rechner R unsichtbar. Es kommt also zu keinen störenden Einflüssen durch die Projektion. Die Information über das Feld F, das vom Projektor P im sichtbaren Bereich exklusiv für den Benutzer angezeigt wird, von der Kamera K jedoch nicht erfaßt wird, wird durch relative Positionierung innerhalb der Benutzeroberfläche BOF gefunden.

Um sicherzustellen, daß der Projektor P für die Kamera K ein unsichtbares Bild liefert, kann der Projektor P zusätzlich mit einem Infrarot-Sperrfilter ausgerüstet sein. Somit wird vom Projektor keinerlei infrarote Strahlung emittiert. Ein spezielles Infrarotfilter IRF vor der Kamera K bewirkt, daß nur infrarote Strahlung in der speziellen Wellenlänge der von der infraroten Lichtquelle IRL emittierten Strahlung erfaßt wird.

## Patentansprüche

1. Anordnung zur Detektion eines Objekts in einem Bereich vor einem projizierten Videobild mit a) einem Projektor für das Projizieren des Videobildes, **gekennzeichnet durch**
b) eine Sendeeinrichtung für in diesen Bereich auszusendende Wellen im nichtsichtbaren Spektralbereich,
c) eine Empfangseinrichtung für das Aufnehmen der im angestrahlten Bereich reflektierten Wellen im nichtsichtbaren Spektralbereich,
d) einen Rechner, der mit einem Erkennungsalgorithmus eingerichtet ist, wobei mit Hilfe der aufgenommenen Wellen im nichtsichtbaren Spektralbereich ein im angestrahlten Bereich befindliches Objekt mit Hilfe des Erkennungsalgorithmus örtlich und zeitlich aufgelöst detektiert wird.

2. Anordnung nach Anspruch 1,
bei der die Einrichtung zur Emission von Wellen im nichtsichtbaren Spektralbereich mindestens eine Infrarot-Lichtquelle umfasst und bei der die Empfangsein:richtung mindestens eine Kamera ist.

3. Anordnung nach Anspruch 2,
bei der die Infrarot-Lichtquelle eine der folgenden Komponenten ist:
a)eine Infrarot-Leuchtdiode (Infrarot-LED),
b)eine Glühbirne mit Infrarot-Filter.

4. Anordnung nach Anspruch 2,
bei der die Kamera mit einem Filter, das nur für Infrarot-Licht durchlässig ist, ausgestaltet ist.

5. Anordnung nach Anspruch 4,
bei der das Filter der Kamera nur für den Spektralbereich der Infrarot-Leuchtdioden durchlässig ist.

6. Anordnung nach einem der Ansprüche 1 bis 5,
bei der der Bereich von unten mit Infrarot-Licht durchleuchtet wird, wobei im sichtbaren Spektralbereich die Projektionsoberfläche reflektierend und im Infrarot-Spektralbereich durchlässig ausgeführt ist.

7. Anordnung nach Anspruch 1,
bei der die Einrichtung zur Emission von Wellen im nichtsichtbaren Spektralbereich mindestens ein Mittel zur Emission von ultravioletter Strahlung umfasst und bei der die Empfangseinrichtung mindestens ein Empfänger für ultraviolette Strahlung ist.

8. Anordnung nach einem der vorhergehenden Ansprüche,
bei der die Einrichtung zur Emission und die Empfangseinrichtung auf einer optischen Achse liegen.

9. Anordnung nach einem der vorhergehenden Ansprüche,
bei der auf dem Bereich mindestens eine der folgenden Oberflächen angebracht ist:
a)Reflexgewebe,
b)Reflexfilme,
c)spezielles Gewebe mit prismenbeschichteter Oberfläche.

10. Verfahren zur Detektion eines Objekts in einem Bereich vor einem projizierten Videobild, bei dem
a)das Videobild mindestens ein Feld aufweist, dem eine Funktion zugeordnet ist,
b)der Bereich mit Wellen im nichtsichtbaren Spektralbereich von einer Sendeeinrichtung angestrahlt wird,
c)die im angestrahlten Bereich reflektierten Wellen im nichtsichtbaren Spektralbereich von einer Empfangseinrichtung aufgenommen werden,
d)ein Objekt in den Bereich bewegt wird,
e)durch einen Erkennungsalgorithmus das Objekt örtlich und zeitlich aufgelöst detektiert wird, und wenn das Objekt für eine vorgebbare Zeitdauer auf ein Feld des Videobildes weist, die dem Feld zugeordnete Funktion aufgerufen wird.

11. Verfahren nach Anspruch 10,
bei dem mit dem Objekt ein Mauszeiger assoziiert wird, der durch Bewegung eines Fingers über das projizierte Gebiet bewegt wird.

12. Verfahren nach einem der Ansprüche 10 bis 11,
bei dem das Objekt zur Auslösung der Funktion als Finger, Hand oder Zeigestab ausgeführt ist.

## Claims

1. Arrangement for detecting an object in an area in front of a projected video image with a) a projector for projecting the video image, **characterised by**
b) a transmitting device for the waves in the invisible spectral range to be emitted into this area,
c) a receiving device for picking up the waves in the invisible spectral range reflected in the radiated area,
d) a computer, which is set up with an identification algorithm, with an object located in the radiated area being detected with local and temporal resolution using the identification algorithm by means of the waves picked up in the invisible spectral range.

2. Arrangement according to claim 1, wherein the device for emitting waves in the invisible spectral range has at least one infrared light source and wherein the receiving device is at least one camera.

3. Arrangement according to claim 2, wherein the infrared light source is one of the following components:
a) an infrared light emitting diode (infrared LED),
b) an incandescent bulb with an infrared filter.

4. Arrangement according to claim 2, wherein the camera is equipped with a filter, which is only permeable for infrared light.

5. Arrangement according to claim 4, wherein the camera filter is only permeable for the spectral range of the infrared light emitting diodes.

6. Arrangement according to one of claims 1 to 5, wherein the area is transilluminated from below with infrared light, with the projection surface being configured as reflective in the visible spectral range and as permeable in the infrared spectral range.

7. Arrangement according to claim 1, wherein the device for emitting waves in the invisible spectral range has at least one means for emitting ultraviolet radiation and wherein the receiving device is at least one receiver for ultraviolet radiation.

8. Arrangement according to one of the preceding claims, wherein the device for emitting and the receiving device are located on one optical axis.

9. Arrangement according to one of the preceding claims, wherein at least one of the following surfaces is applied to the area:
a) reflective fabric
b) reflective film
c) special fabric with a prism-coated surface.

10. Method for detecting an object in an area in front of a projected video image, wherein
a) the video image has at least one field, to which a function is assigned,
b) the area is radiated with waves in the invisible spectral range by a transmitting device,
c) the waves in the invisible spectral range reflected in the radiated area are picked up by a receiving device,
d) an object is moved into the area,
e) the object is detected with local and temporal resolution by means of an identification algorithm and when the object points for a predefinable period to a field in the video image the function assigned to the field is called up.

11. Method according to claim 10, wherein a mouse pointer is associated with the object and is moved over the projected area by means of a finger movement.

12. Method according to one of claims 10 to 11, wherein the object to activate the function is in the form of a finger, hand or pointer.

## Revendications

1. Dispositif pour la détection d'un objet dans une zone devant une image vidéo projetée avec a) un projecteur pour la projection de l'image vidéo, **caractérisé par**
b) un dispositif d'émission pour des ondes à émettre dans cette zone dans la zone spectrale invisible,
c) un dispositif de réception pour l'enregistrement des ondes réfléchies dans la zone irradiée dans la zone spectrale invisible,
d) un ordinateur, qui est aménagé avec un algorithme de reconnaissance, un objet se trouvant dans la zone irradiée étant détecté, avec une résolution locale dans le temps, à l'aide de l'algorithme de reconnaissance à l'aide des zones enregistrées dans la zone spectrale invisible.

2. Dispositif selon la revendication 1,
dans lequel l'appareil pour l'émission d'ondes dans la zone spectrale invisible comprend au moins une source lumineuse infrarouge et dans lequel le dispositif de réception est au moins une caméra.

3. Dispositif selon la revendication 2,
dans lequel la source lumineuse infrarouge est l'un des composants suivants :
a) une diode électrolumineuse infrarouge (LED infrarouge),
b) une ampoule avec filtre infrarouge.

4. Dispositif selon la revendication 2,
dans lequel la caméra est conçue avec un filtre qui est transparent seulement pour la lumière infrarouge.

5. Dispositif selon la revendication 4,
dans lequel le filtre de la caméra est transparent seulement pour la zone spectrale des diodes électroluminescentes infrarouges.

6. Dispositif selon l'une quelconque des revendications là 5,
dans lequel la zone est éclairée par le bas avec de la lumière infrarouge, la surface de projection étant conçue réfléchissante dans la zone spectrale visible et transparente dans la zone spectrale infrarouge.

7. Dispositif selon la revendication 1,
dans lequel le dispositif pour l'émission d'ondes dans la zone spectrale invisible comprend au moins un moyen pour l'émission de rayonnement ultraviolet et dans lequel le dispositif de réception est au moins un récepteur pour du rayonnement ultraviolet.

8. Dispositif selon l'une quelconque des revendications précédentes,
dans lequel le dispositif pour l'émission et le dispositif de réception se situent sur un axe optique.

9. Dispositif selon l'une quelconque des revendications précédentes,
dans lequel au moins l'une des surfaces suivantes est placée sur la zone :
a) tissu réflexe,
b) film réflexe,
c) tissu spécial avec surface revêtue de prismes.

10. Procédé pour la détection d'un objet dans une zone devant une image vidéo projetée, dans lequel
a) l'image vidéo présente au moins un champ auquel est attribuée une fonction,
b) la zone est irradiée avec des ondes dans la zone spectrale invisible par un dispositif d'émission,
c) les zones réfléchies dans la zone irradiée sont enregistrées dans la zone spectrale invisible par un dispositif de réception,
d) un objet est déplacé dans la zone,
e) l'objet est détecté avec une résolution locale et dans le temps par un algorithme de reconnaissance et lorsque l'objet est dirigé pour une durée prédéfinissable sur un champ de l'image vidéo, la fonction attribuée au champ est appelée.

11. Procédé selon la revendication 10,
dans lequel un curseur de souris, qui est déplacé par le déplacement d'un doigt sur la zone projetée, est associé à l'objet.

12. Procédé selon l'une quelconque des revendications 10 à 11,
dans lequel l'objet est réalisé pour l'exécution de la fonction sous la forme d'un doigt, d'une main ou d'une barre indicatrice.
